# EUROPÄISCHE PATENTSCHRIFT

(11) **EP 3 095 657 B1**
(45) Veröffentlichungstag und Bekanntmachung des Hinweises auf die Patenterteilung: **05.06.2024**
(21) Anmeldenummer: 16000835.5
(22) Anmeldetag: 13.04.2016
(51) Int. Cl.: B60W 10/24, B60W 10/30, B60W 50/00, B60W 20/00, B60W 30/18

(54) **VERFAHREN ZUR STEUERUNG VON LEISTUNGSFLÜSSEN IN EINEM KRAFTFAHRZEUG, STEUERVORRICHTUNG, SOWIE KRAFTFAHRZEUG**
METHOD FOR CONTROLLING POWER FLOWS IN A MOTOR VEHICLE, CONTROL DEVICE AND VEHICLE
PROCEDE DE CONTRÔLE DE FLUX DE PUISSANCE DANS UN VÉHICULE AUTOMOBILE, DISPOSITIF DE CONTRÔLE ET VÉHICULE

(30) Priorität: 19.05.2015 DE 102015006453
(43) Veröffentlichungstag der Anmeldung: 23.11.2016
(73) Patentinhaber: MAN Truck & Bus SE, 80995 München (DE)
(72) Erfinder: Hierlmeier, Matthias, 80997 München (DE); Kirchensteiner, Elmar, 85256 Vierkirchen (DE); Günnewicht, Manuel, 81243 München (DE); Nuber, Johannes, 85748 Garching bei München (DE); Ovari, Sebastian, 85241 Hebertshausen (DE); Kerschl, Stefan, 85402 Kranzberg (DE)
(74) Vertreter: v. Bezold & Partner Patentanwälte - PartG mbB

(56) Entgegenhaltungen:
- EP-A2- 2 857 270
- WO-A2-2014/058383
- US-A1- 2010 312 425
- US-A1- 2014 200 763
- US-A1- 2014 365 075

## Beschreibung

Die Erfindung betrifft ein Verfahren zur Steuerung von Leistungsflüssen in einem Kraftfahrzeug zur verbrauchsoptimierten Versorgung mehrerer Energiesysteme des Kraftfahrzeugs. Das Verfahren betrifft insbesondere ein Verfahren zur Verteilung von Leistungsflüssen, die in Fahrsituationen des Kraftfahrzeugs, in denen Leistung kostengünstig zur Verfügung steht, erzeugt werden.

Durch stetig strenger werdende Abgasgesetzgebungen und Forderungen der Fahrzeughalter nach reduzierten Betriebskosten werden an Fahrzeuge zunehmend hohe Anforderungen bezüglich ihres Kraftstoffverbrauchs gestellt. Ein hohes Potential zur Verbrauchsreduzierung bieten Gesamtfahrzeug-Energiemanagementsysteme, welche die Leistungsflüsse im Fahrzeug situationsabhängig steuern. So kann das Gesamtfahrzeug-Energiemanagement in Fahrsituationen, in denen Leistung "kostengünstig" bereitgestellt werden kann, d. h. verhältnismäßig wenig oder kein Kraftstoff dafür eingesetzt werden muss, die Leistungsflüsse so steuern, dass mehrere Energiesysteme im Fahrzeug (z. B. Druckluftsystem) ihre Energiespeicher aufladen. Während der nachfolgenden Fahrsituationen, in denen Leistung "teuer" ist, d. h. verhältnismäßig viel Kraftstoff für deren Erzeugung eingesetzt werden muss, kann die in den Energiespeichern vorhandene, "kostengünstig erworbene" Energie genutzt werden, um Energieverbraucher zu versorgen, wodurch der Verbrennungsmotor entlastet wird.

Aus der Praxis sind Ansätze bekannt, gemäß denen in Fahrsituationen, in denen Leistung "kostengünstig" bereitgestellt werden kann, die überschüssige Leistung pauschal auf alle Energiesysteme, die über die Hauptantriebswelle der Brennkraftmaschine mit Leistung versorgt werden, verteil werden. Nachteilig hieran ist, dass gemäß diesem Ansatz unterschiedliche Zustände und Eigenschaften der Energiesysteme, insbesondere die aktuellen Ladezustände der jeweiligen Energiespeicher, nicht ausreichend berücksichtigt werden und die verfügbare Leistung nicht verbrauchsoptimal verteilt bzw. ausgenutzt wird.

Aus der US 2014/0365075 A1 ist ein Verfahren und System zur Verteilung einer Rekuperationsleistung für ein Fahrzeug bekannt, wobei eine Rekuperationsleistung an Energiesenken verteilt wird, wobei hierbei eine Priorisierung der Energiesenken vorgenommen wird. Aus der WO 2014/058383 A2 ist ein weiteres Verfahren und ein System zur Nutzung freier Energie bekannt, wobei Situationen erkannt werden, bei denen kostenlos Energie für das Fahrzeug verfügbar sein wird. Verfügbare kostenlose Energie wird zum Auffüllen mindestens eines Energiespeichers berücksichtigt, wobei eine Priorisierung angewendet werden kann. Aus der US 2010/0312425 A1 ist ein Energiemanagementsystem bekannt, das verfügbare Energie auf mehrere Vorrichtungen innerhalb des Fahrzeugs verteilt, wobei eine Kostenfunktion angewendet wird. Ferner offenbart die US 2014/0200763 A1 ein Verfahren zum Steuern einer Hilfslast eines Elektrofahrzeugs, wobei zur Nutzung im Fall sogenannter "Regenerativ-stromereignisse" anfallender Energie eine Vorsteuerung der Hilfslast vorgeschlagen wird.

Es ist somit eine Aufgabe der Erfindung, ein verbessertes Verfahren zur Steuerung von Leistungsflüssen in einem Kraftfahrzeug bereitzustellen, mit dem Nachteile herkömmlicher Techniken vermieden werden können. Es ist insbesondere eine Aufgabe der Erfindung, ein Verfahren zur Steuerung von Leistungsflüssen in einem Kraftfahrzeug bereitzustellen, mit dem Leistungsflüsse, die in Fahrsituationen des Kraftfahrzeugs, in denen Leistung kostengünstig zur Verfügung steht, erzeugt werden, möglichst verbrauchsoptimiert auf die vorhandenen Energiesysteme verteilt werden können.

Diese Aufgaben werden durch ein Verfahren gemäß Anspruch 1 gelöst.

Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Die Erfindung beruht auf der technischen Erkenntnis, dass der Gesamtkraftstoffverbrauch des Fahrzeugs weiter reduziert werden kann, wenn die Verteilung der kostengünstig erzeugten Leistungsflüsse auf die Energiesysteme des Fahrzeugs auf Basis einer zuvor durchgeführten Priorisierung der Energiesysteme erfolgt.

Erfindungsgemäß wird somit ein Verfahren zur Steuerung von Leistungsflüssen in einem Kraftfahrzeug zur verbrauchsoptimierten Versorgung mehrerer Energiesysteme des Kraftfahrzeugs bereitgestellt. Das Kraftfahrzeug kann ein nur verbrennungsmotorisch antreibbares Kraftfahrzeug sein. Das Kraftfahrzeug kann auch ein Hybrid- oder Elektrofahrzeug sein. Die mehreren Energiesysteme umfassen zumindest zwei der folgenden Energiesysteme: ein Bordnetz mit einem elektrischen Energiespeicher, ein Druckluftsystem, ein Kühlsystem und ein Klimasystem. Gemäß dem Verfahren wird in Fahrsituationen des Kraftfahrzeugs, in denen Leistung kostengünstig erzeugt, d. h. zur Verfügung steht, eine Leistungsaufnahme zumindest eines der Energiesysteme erhöht, um die in dem wenigstens einen Energiesystem gespeicherte Energie zu erhöhen.

Gemäß allgemeinen Gesichtspunkten der Erfindung wird die in diesen Fahrsituationen kostengünstig zur Verfügung stehende Leistung in Abhängigkeit von einer Priorisierung der Energiesysteme auf die Energiesysteme verteilt. Dies bietet den Vorzug, dass die Leistungsflüsse priorisiert auf diejenigen Energiesysteme verteilt werden kann, die die Leistungsflüsse im Hinblick auf eine Gesamtkraftstoffoptimierung des Fahrzeugs am effizientesten verarbeiten können, z. B. weil das oder die priorisierten Energiesysteme die verfügbare Leistung aktuell mit hohem Wirkungsgrad speichern können oder weil dadurch ein bevorstehender Zwangsladevorgang eines entladenen Energiespeichers der Energiesysteme zu einem Zeitpunkt, in dem Leistung möglicherweise nicht mehr kostengünstig verfügbar ist, vermieden werden kann.

Erfindungsgemäß wird die Priorisierung in Abhängigkeit von prädizierten, d. h. vorausschauend bestimmten bzw. vorhergesagten Quereinflüssen zwischen den Energiesystemen bestimmt. Die Quereinflüsse geben dabei an, wie stark ein Leistungsfluss in einem der Energiesysteme die Leistungsflüsse in den anderen Energiesystemen beeinflusst. Diese ergeben sich durch die üblicherweise starke Kopplung der einzelnen Energiesysteme, wobei die Quereinflüsse je nach Art der Leistungsflüsse im Fahrzeug unterschiedlich ausgeprägt sind. Ein Beispiel für einen Quereinfluss ist die Kopplung zwischen dem Energiesystem Klimaanlage und dem Energiesystem elektrisches Bordnetz durch einen elektrisch angetriebenen Klimakompressor. Der Betrieb des Klimakompressors bedingt einen elektrischen Leistungsfluss im elektrischen Bordnetz. Die Quereinflüsse stellen somit die Leistungsflusskopplungen zwischen den einzelnen Energiesystemen dar. Gemäß dieser Ausführungsform können somit die Wechselwirkungen zwischen den einzelnen Energiesystemen bei der Leistungsverteilung berücksichtigt werden.

Unter der "kostengünstig zur Verfügung stehende Leistung" wird der mechanische und/oder elektrische Leistungsfluss im Antriebsstrang verstanden, der in Fahrsituationen, in denen Leistung kostengünstig zur Verfügung steht, erzeugt wird.

Unter den "Fahrsituationen des Kraftfahrzeugs, in denen Leistung kostengünstig zur Verfügung steht" sollen bei einem nur rein verbrennungsmotorisch betreibbaren Fahrzeug diejenigen Fahrsituationen verstanden werden, in denen zur Bereitstellung von Leistung kein Kraftstoff und/oder verhältnismäßig wenig Kraftstoff eingesetzt werden muss. Bei einem Hybridfahrzeug sind es analog diejenigen Fahrsituationen, in denen zur Bereitstellung von Leistung kein Kraftstoff und keine gespeicherte elektrische Energie und/oder verhältnismäßig wenig Kraftstoff und gespeicherte elektrische Energie eingesetzt werden müssen.

Derartige Fahrsituationen, in denen kein Kraftstoff zur Bereitstellung von Leistung eingesetzt werden muss, umfassen einen Schubbetrieb des Kraftfahrzeugs. Die im Schubbetrieb freigesetzte Energie steht als kostengünstig erzeugte Leistung zur Verfügung und kann durch eine erhöhte Leistungsaufnahme der Energiesysteme aufgenommen werden.

Bei Nutzfahrzeugen können derartige Fahrsituationen beispielsweise einen Dauerbremsbetrieb umfassen, bei dem die angeforderte Bremsleistung nicht ausschließlich von der Dauerbremse aufgebracht wird, sondern zumindest teilweise oder vorzugsweise vollständig durch eine erhöhte Leistungsaufnahme der Nebenaggregate der Energiesysteme. Über die erhöhte Leistungsaufnahme der Energiesysteme, beispielsweise über die erhöhte Leistungsaufnahme eines Nebenaggregats des Energiesystems, das über die Hauptantriebswelle mit Leistung versorgt wird, können die Energiespeicher der Energiesysteme aufgeladen werden.

Die Fahrsituationen können einen Bremsrekuperationsbetrieb eines Hybridfahrzeugs umfassen, bei dem ein negatives Fahrerwunschmoment zumindest teilweise von einer im generatorischen Betrieb arbeitenden elektrischen Maschine aufgebracht wird und dadurch kostengünstig ein elektrischer Energiefluss erzeugt wird.

Derartige Fahrsituationen umfassen ferner eine Fahrt im Teillastbereich mit einer Lastpunkterhöhung eines Verbrennungsmotors des Kraftfahrzeugs, wobei der Verbrennungsmotor in einem Kennfeldbereich mit einem günstigeren Wirkungsgrad betrieben wird und die das Fahrerwunschmoment übersteigende Leistung mit verhältnismäßig wenig Kraftstoff erzeugt wird und somit kostengünstig zur Verfügung steht, um Energiespeicher der Energiesystem aufzuladen.

Der Begriff "Energiesystem" ist im Rahmen der vorliegenden Erfindung breit auszulegen und soll jedes mit Energie versorgte System eines Kraftfahrzeugs umfassen, das einen wiederaufladbaren Energiespeicher, eine Energiequelle, z. B. ein Nebenaggregat, zur Versorgung des Energiesystems und zum Aufladen des Energiespeichers des Energiesystems und zumindest einen Verbraucher aufweist. Der Begriff "wiederaufladbarer Energiespeicher" ist im Rahmen der vorliegenden Erfindung ebenfalls breit auszulegen und kann jeden wiederaufladbaren Speicher für Energie, beispielsweise für thermische Energie, potentielle Energie, kinetische Energie oder elektrische Energie umfassen.

Die Energiesysteme sind vorzugsweise Energiesysteme, die über die Hauptantriebswelle der Brennkraftmaschine mit einem mechanischen Leistungsfluss versorgt werden. Vorzugsweise weisen die Energiesysteme jeweils ein Nebenaggregat auf, das über die Hauptantriebswelle der Brennkraftmaschine mit Leistung versorgt wird.

Ein Energiesystem kann das Druckluftsystem des Fahrzeugs sein, beispielsweise zur Versorgung druckluftbetätigter Bremsen oder Türen eines Nutzfahrzeugs, aufweisend einen Luftpresser als Nebenaggregat und einen über den Luftpresser aufladbaren Drucklufttank als Energiespeicher.

Das Energiesystem kann ein Kühlsystem des Fahrzeugs sein, aufweisend einen Lüfter als Nebenaggregat und einen thermischen Energiespeicher zur Speicherung der thermischen Energie des Kühlsystems. Der thermische Speicher kann die thermische Masse des Kühlmittels und/oder des Kühlmittelkreislaufs sein.

Das Energiesystem kann ein Klimasystem des Fahrzeugs sein, aufweisend einen Klimakompressor als Nebenaggregat und einen thermischen Energiespeicher. Der thermische Energiespeicher kann beispielsweise den Fahrzeuginnenraum umfassen, in dem thermische Energie des Klimasystems gespeichert werden kann. Beispielsweise kann kostengünstig verfügbare Leistung dazu genutzt werden, die Temperatur des Fahrzeuginnenraums für den Fahrgast nicht merkbar, z. B. um +/- 1 Kelvin abweichend zur Solltemperatur zu verändern, so dass der Energieverbrauch zu einem späteren Zeitpunkt, wenn für die Erzeugung der Kühl- oder Heizleistung wieder (verhältnismäßig mehr) Kraftstoff aufgebracht werden muss, reduziert oder verzögert werden kann.

Das Energiesystem kann ferner ein elektrisches Bordnetz sein, aufweisend eine Lichtmaschine als Nebenaggregat und einen Akkumulator als elektrischen Energiespeicher.

Bei einem Hybridfahrzeug kann das Energiesystem ferner ein elektrisches Niedervolt-Bordnetz und/oder ein Hochvolt-Netz sein, aufweisend eine motorisch und generatorisch betreibbare elektrische Traktionsmaschine, die mit einem Traktionsenergiespeicher verbindbar ist. Der Traktionsenergiespeicher dient zur Versorgung der elektrischen Traktionsmaschine mit elektrischer Energie und zur Speicherung der von der elektrischen Traktionsmaschine generatorisch erzeugten Energie.

Die vorstehenden Beispiele für mögliche Energiesysteme sind nur beispielhaft und nicht vollständig.

Erfindungsgemäß wird für jedes Energiesystem eine Restzeit (engl. Remaining Time to Constraint (RTC) bestimmt, die eine aktuell verbleibende Zeit bis zum Eintritt einer Zwangsladebedingung eines Energiespeichers des jeweiligen Energiesystems angibt. Die Ladezwangsbedingung des jeweiligen Energiespeichers tritt ein, wenn ein Ladezustand des Energiespeichers einen vorbestimmten Ladezustands-Schwellenwert unterschreitet und das Unterschreiten dieses Ladezustands-Schwellenwerts einen Ladevorgang des Energiespeichers auslöst. Hierbei erfolgt die Priorisierung in Abhängigkeit von den bestimmten Restzeiten. Beispielsweise können die Energiesysteme in aufsteigender Reihenfolge ihrer Restzeit priorisiert geladen werden. Gemäß dieser Variante können teure Zwangsladevorgänge verhindert oder zumindest reduziert werden.

Gemäß einer weiteren bevorzugten Ausführungsform wird für jedes Energiesystem ein Wirkungsgrad vorgegeben oder in Abhängigkeit von wenigstens einem aktuellen Betriebsparameter des Fahrzeugs bestimmt, der angibt, mit welchem Wirkungsgrad ein Energiespeicher des Energiesystems einen aktuell verfügbaren Leistungsfluss zum Aufladen des Energiespeichers nutzen kann. Gemäß dieser Variante erfolgt die Priorisierung in Abhängigkeit von den bestimmten Wirkungsgrade, beispielsweise können die Energiesysteme in absteigender Reihenfolge der bestimmten Wirkungsgrade priorisiert geladen werden. Gemäß einer alternativen Möglichkeit der erfindungsgemäßen Realisierung werden nur oder zuerst diejenigen Energiesysteme geladen, deren bestimmter Wirkungsgrad einen Wirkungsgradschwellenwert überschreitet. Diese Variante stellt sicher, dass die kostengünstig verfügbaren Leistungen priorisiert an diejenigen Energiesysteme verteilt werden, die sie am effizientesten nutzen können.

Eine weitere Möglichkeit der erfindungsgemäßen Realisierung sieht vor, dass eine Höhe der jeweiligen Soll-Ladeleistungsanforderung der priorisierten Energiesysteme jeweils auf eine maximale Ladeleistung der Energiesysteme festgelegt wird, falls die kostengünstig verfügbare Leistung kleiner gleicher einer Summe der maximalen Ladeleistungen der Energiesysteme ist. Die Soll-Ladeleistungsanforderung ist eine Steuergröße, die beispielsweise durch das Energiemanagementsystem des Fahrzeugs vorgegeben wird und vorgibt, welche Leistung vom Energiesystem angefordert wird.

Eine bevorzugte Ausführungsform des erfindungsgemäßen Verfahrens ist dadurch gekennzeichnet, dass die Verteilung der kostengünstig zur Verfügung stehenden Leistungen in Abhängigkeit von einer Priorisierung der Energiesysteme gemäß der folgenden Schritte durchgeführt wird, deren Abfolge solange wiederholt durchlaufen wird, bis die zur Verfügung stehende Leistung vollständig auf die Energiesysteme aufgeteilt ist:
a) Berechnung der kostengünstig zur Verfügung stehenden Leistungen abzüglich der aktuell von den Energiesystemen angeforderten Soll-Ladeleistungsanforderungen; b) Bestimmung der hinsichtlich Ladebereitschaft und Ladekapazität verfügbaren Energiesysteme, denen noch nicht ihre maximale Ladeleistung als Soll-Ladeleistungsanforderung zugeteilt wurde; c) Priorisierung der bestimmten verfügbaren Energiesysteme in Abhängigkeit von wenigstens den im Anspruch 1 definierten Priorisierungsparametern, d) Auswahl des am höchsten priorisierten verfügbaren

Energiesystems; und e) Berechnung einer Soll-Ladeleistungsanforderung für das ausgewählte Energiesystem. Unter Berücksichtigung der in Schritt e) berechneten Soll-Ladeleistungsanforderung wird dann in Schritt a) ein neuer Wert für die kostengünstig zur Verfügung stehenden Leistungen abzüglich der aktuell von den Energiesystemen angeforderten Soll-Ladeleistungsanforderungen berechnet.

Ergibt sich in Schritt a), dass keine nutzbare Restleistung nach Abzug der angeforderten Soll-Ladeleistungsanforderungen mehr verfügbar ist, dann werden die Schritte b) bis e) nicht mehr durchlaufen, stattdessen werden die bestimmten Soll-Ladeleistungsanforderungen als Steuergrößen an die Energiesysteme ausgegeben. Ergibt sich in Schritt b), dass allen verfügbaren Energiesystemen bereits ihre maximale Soll-Ladeleistung zugeordnet wurde, dann werden die Schritte c) bis e) nicht mehr durchlaufen, stattdessen werden die bestimmten Soll-Ladeleistungsanforderungen als Steuergrößen an die Energiesysteme ausgegeben.

Die möglichen Quereinflüsse zwischen jeweils zwei Energiesystemen können in Form eines vorbestimmten festen Werts und/oder in Form eines hinterlegten Kennfeldes, das die Leistungsflusskopplung in Abhängigkeit von wenigstens einem Betriebsparameter festlegt, bestimmt werden, wobei für jeden Quereinfluss dessen Wirkrichtung und vorzugweise dessen Höhe bestimmt wird. Beispielsweise können die möglichen Quereinflüsse zwischen den Energiesystemen in Form einer Berechnungsmatrix hinterlegt sein, wobei die Einträge der Matrix jeweils eine Leistungsflusskopplung zwischen zwei Energiesystemen festlegt.

Gemäß einem weiteren Gesichtspunkt der Erfindung wird eine Steuervorrichtung gemäß Anspruch 9 bereitgestellt.

Die Erfindung betrifft ferner ein Kraftfahrzeug, insbesondere ein Nutzfahrzeug, gemäß Anspruch 10.

Die zuvor beschriebenen bevorzugten Ausführungsformen und Merkmale der Erfindung sind im von den beigefügten Patentansprüchen definierten Rahmen beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein Ablaufdiagramm eines ersten Ausführungsbeispiels der Erfindung;
- Figur 2: ein Ablaufdiagramm eines zweiten Ausführungsbeispiels der Erfindung;
- Figuren 3A bis 3G: Leistungsflussdiagramme, die eine Aufteilung der kostengünstig zur Verfügung stehenden Leistung gemäß einem Ausführungsbeispiel der Erfindung illustrieren; und
- Figur 4: eine Berechnungsmatrix zur Berechnung der Quereinflüsse zwischen den Energiesystemen.

Gleiche oder äquivalente Komponenten sind in allen Figuren mit den gleichen Bezugszeichen bezeichnet.

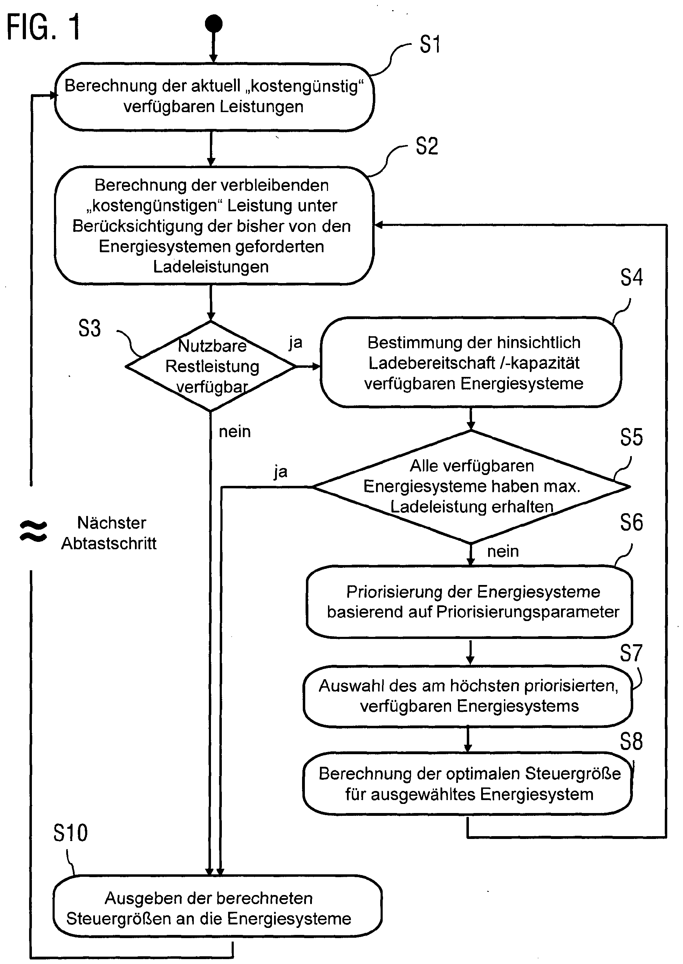

Figur 1 illustriert ein erstes Ausführungsbeispiel der Erfindung, bei dem Quereinflüsse zwischen den Energiesystemen nicht berücksichtigt werden.

Der Ausgangspunkt des Verfahrens in Schritt S1 ist die Berechnung der Leistung, die aktuell kostengünstig verfügbar ist (engl. Available Inexpensive Power (AlP)). Wie vorstehend bereits erwähnt, ist ein Beispiel für eine solche Fahrsituation, in der Leistung kostengünstig verfügbar ist, eine Schubphase. Während des Schubbetriebs ist durch die Trägheit der Fahrzeugmasse Leistung kostenlos, d. h. ohne Kraftstoffverbrauch verfügbar. Die Menge der kostengünstigen Leistung ist dabei von der Soll-Bremsleistung des Fahrzeugs abhängig. Bei einer Bremsrekuperation kann die Menge der kostengünstig verfügbaren Leistung aus der Soll-Bremsleistung bestimmt werden, die der Fahrer vorgibt, wenn er auf die Bremse tritt. Die Soll-Bremsleistung ergibt sich aus der Bremspedalstellung. Damit die Bremsleistung nicht ungenutzt in Wärmeenergie umgewandelt wird, verteilt das Bremsregelsystem diese Soll-Bremsleistung nicht ausschließlich auf die Betriebsbremsen, sondern auf eine E-Maschine und die Nebenaggregate, die mit der Hauptantriebswelle in Wirkverbindung stehen.

Die Soll-Bremsleistung kann auch bei Aktivierung der Dauerbremse aus der vom Fahrer eingestellten Soll-Bremsleistung der Dauerbremse (z. B. hydraulischer Retarder) eines Nutzfahrzeugs bestimmt werden.

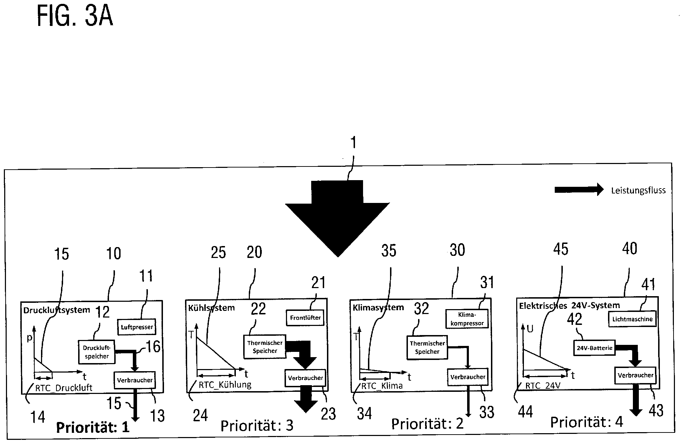

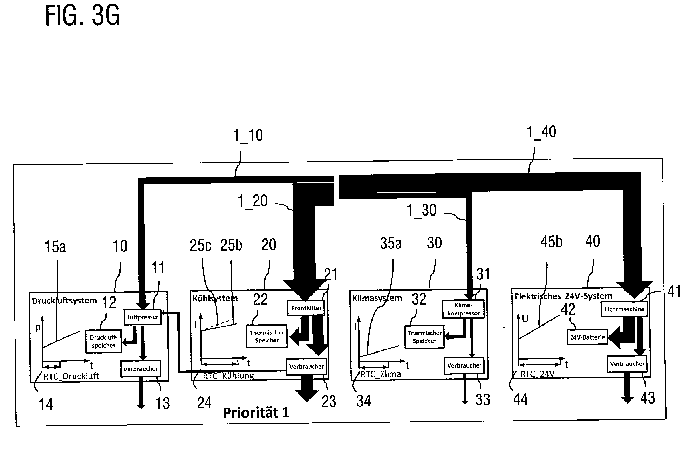

Zur Illustration des Ausführungsbeispiels wird ein nur verbrennungsmotorisch antreibbares Nutzfahrzeug betrachtet, bei dem die folgenden Energiesysteme für ein Energiemanagement genutzt werden können: ein Druckluftsystem, ein Kühlsystem, ein Klimasystem und ein elektrisches 24 V-System (Bordnetz), was nachfolgend noch anhand der Figuren 3A bis 3G detaillierter erläutert wird.

Für das vorliegende Ausführungsbeispiel wird ein Fall zu Grunde gelegt, bei dem das Nutzfahrzeug in ein Gefälle einfährt und der Fahrer die Dauerbremse aktiviert und eine Soll-Bremsleistung der Dauerbremsen (z. B. hydraulischer Retarder) einstellt. Das Energiemanagementsystem des Fahrzeugs erkennt diese Aktivierung der Dauerbremse als eine Fahrsituation, in der kostengünstig Leistung zur Verfügung steht. Die vom Fahrer eingestellte Soll-Bremsleistung wird dann nicht vollständig durch die Dauerbremsen erzeugt, da die Leistung hierbei nicht genutzt werden könnte. Stattdessen wird die Bremsleistung zu einem möglichst großen Teil (im Idealfall 100 %) durch die Energiesysteme im Fahrzeug aufgebracht. Dies wird durch eine erhöhte Leistungsaufnahme der Nebenaggregate (Energiequellen der Energiesysteme) erreicht, welche zum Laden der Energiespeicher der Energiesysteme genutzt werden.

Abhängig von der Soll-Dauerbremsleistung stellt das Dauerbremsmanagement einem Gesamtfahrzeug-Energiemanagement die in Schritt S1 berechnete bestimmte Leistung als kostengünstig verfügbare Leistung zur Verfügung. Diese kostengünstig verfügbare Leistung wird im Gesamtfahrzeug-Energiemanagement gemäß den folgenden Schritten auf die Energiesysteme aufgeteilt.

In Schritt S2 wird die Summe der bisher von den Energiesystemen geforderten Ladeleistungen bestimmt und von dem Wert der verbleibenden "kostengünstigen" Leistung abgezogen. In Schritt S3 wird dann geprüft, ob der resultierende Wert größer null ist. Falls ja, steht noch kostengünstige Leistung zur Verteilung auf das Energiesystem zur Verfügung.

Falls in Schritt S3 ermittelt wird, dass keine nutzbare Restleistung verfügbar ist, dann werden in Schritt S10 die berechneten Steuergrößen, insbesondere die Soll-Leistungsanforderungen, z. B. die Soll-Ladeleistungsänderungen, der Energiesysteme als berechnete Steuergrößen an die Energiesysteme ausgegeben. Die Nebenaggregate der Energiesysteme werden dann gemäß der ausgegebenen Steuergrößen angesteuert.

Falls in Schritt S3 ermittelt wird, dass noch nutzbare Restleistung verfügbar ist, wird in Schritt S4 ermittelt, welche Energiesysteme aktuell zum Laden ihrer Energiespeicher zur Verfügung stehen. Ausschlusskriterien für ein Laden können z. B. ein zu voller Energiespeicher oder überhitzte Komponenten sein.

Anschließend wird in Schritt S5 geprüft, ob den in Schritt S4 als verfügbar ermittelten Energiesystemen bereits ihre maximale Ladeleistung in Form der Soll-Leistungsanforderungen zugeordnet wurde. Falls dies bereits für alle der als verfügbar ermittelten Energiesysteme der Fall ist, wird mit Schritt S10 fortgefahren, da keinem der verfügbaren Energiesysteme noch eine höhere Soll-Ladeleistung als Steuergröße zugeordnet werden kann.

Ergibt Schritt S5 jedoch, dass hinsichtlich Ladebereitschaft und Ladekapazität Energiesysteme verfügbar sind, denen noch nicht ihre maximale Ladeleistung als Soll-Ladeleistungsanforderung zugeteilt wurde, dann werden diese Energiesysteme anschließend in Schritt S6 priorisiert.

In Schritt S6 wird beurteilt, welches Energiesystem priorisiert kostengünstige Leistung erhalten soll. Hierzu werden die Energiesysteme in Abhängigkeit von wenigstens einem Priorisierungsparameter priorisiert, z. B. unter Berücksichtigung von Einflussgrößen wie z. B. Zeit bis zum Eintritt einer Ladezwangsbedingung, Einzelwirkungsgrade, Gesamtwirkungsgrad etc..

Anschließend wird in Schritt S7 das am höchsten priorisierte Energiesystem ausgewählt.

Die Priorisierung in Schritt S6 kann z. B. nach festen Regeln erfolgen, bei der bestimmte Energiesysteme immer bevorzugt werden. Die Leistung kann auch wirkungsgradabhängig verteilt werden: Hierbei werden priorisiert die Speicher derjenigen Energiesysteme geladen, welche die verfügbare Leistung mit hohem Wirkungsgrad nutzen können. Ebenso kann die Priorisierung der einzelnen Energiesysteme anhand der Restzeiten (Remaining Time to constraint, RTC), die je Energiesystem bis zum Eintritt einer sogenannten Ladezwangsbedingung verbleiben, erfolgen. Eine Ladezwangsbedingung ist, wie vorstehend bereits erwähnt, dadurch charakterisiert, dass der Ladezustand eines Energiespeichers eine kritische Schwelle unterschreitet und dieser zwingend geladen bzw. der Ladezustand des Speichers mindestens auf diesem Grenzwert gehalten werden muss. Wird die Restzeit bis zur Ladezwangsbedingung als Priorisierungsparameter verwendet, berechnet das Auswahlverfahren im Gesamtfahrzeug-Energiemanagement für alle verfügbaren Energiesysteme die Restzeit bis zum Eintritt einer Ladezwangsbedingung und wählt in Schritt S7 dasjenige Energiesystem zum Laden aus, welches aktuell die kleinste Restzeit (RTC) besitzt.

Für das in Schritt S7 ausgewählte Energiesystem wird anschließend in Schritt S8 die Steuergröße in Form der Soll-Leistungsanforderung, z. B. als Soll-Ladeleistung, berechnet.

Die Höhe der Soll-Ladeleistung für das ausgewählte Energiesystem entspricht im einfachsten Fall der maximalen Ladeleistung des Energiesystems. Bei einer großen Anzahl von verfügbaren Energiesystemen kann die Soll-Ladeleistung optimiert werden: Wenn die kostengünstig verfügbare Leistung kleiner ist als die Summe der maximalen Leistungen aller Energiesysteme, können nicht alle Energiespeicher mit maximaler Leistung geladen werden. In diesem Fall wird an Energiesysteme, deren Restzeit (RTC) relativ hoch ist, z. B. größer als ein vorbestimmter Schwellenwert, eine Soll-Ladeleistung ausgegeben, welche aktuell den jeweils optimalen Wirkungsgrad im Energiesystem aufweist.

Gemäß dieser Variante ist anzumerken, dass der Wirkungsgrad oft stark abhängig vom Betriebspunkt (z.B. Leistung) ist und allgemein über hinterlegte Tabellen bzw. Kennfelder bestimmt werden kann.

Aus lokaler Sicht (für jedes einzelne Energiesystem) kann der Wirkungsgrad vereinfacht optimiert werden, indem genau die Steuergrößen (insbesondere die Soll-Ladeleistung) berechnet werden, bei denen sich der (lokale) maximale Wirkungsgrad im jeweiligen Energiesystem ergibt.

Insbesondere wenn die Priorisierung in Schritt S6 auf Basis der Wirkungsgrade erfolgt, kann der Wirkungsgrad optional auch aus globaler Sicht optimiert werden: Die Wirkungsgrade des aktuell ausgewählten Energiesystems werden dann zusätzlich mit den Wirkungsgraden der sonstigen verfügbaren Energiesysteme verglichen. Es müssen dann in einem eigenen Optimierer genau die Betriebspunkte aller Energiesysteme gefunden werden, bei denen sich der beste Gesamtwirkungsgrad über alle Energiesysteme ergibt.

Die Energiesysteme, deren Restzeit (RTC) dagegen klein ist, z. B. kleiner gleich dem vorbestimmten Schwellenwert, werden jedoch mit maximaler Ladeleistung geladen. Dadurch wird sichergestellt, dass Energiesysteme mit hoher Restzeit (RTC) möglichst optimal und gleichmäßig geladen werden und Energiesysteme, welche dringend Leistung benötigen, mit voller Leistung geladen werden.

Anschließend wird wieder Schritt S2 durchgeführt, um das Verfahren ein weiteres Mal zu durchlaufen (bis auf Schritt S1). Wird in Schritt S3 ermittelt, dass noch nutzbare Restleistung verfügbar ist, erhält wieder ein weiteres verfügbares Energiesystem einen Teil der verbleibenden kostengünstig verfügbaren Leistung. Dabei wird auch die Priorisierung der Energiesysteme erneut durchgeführt.

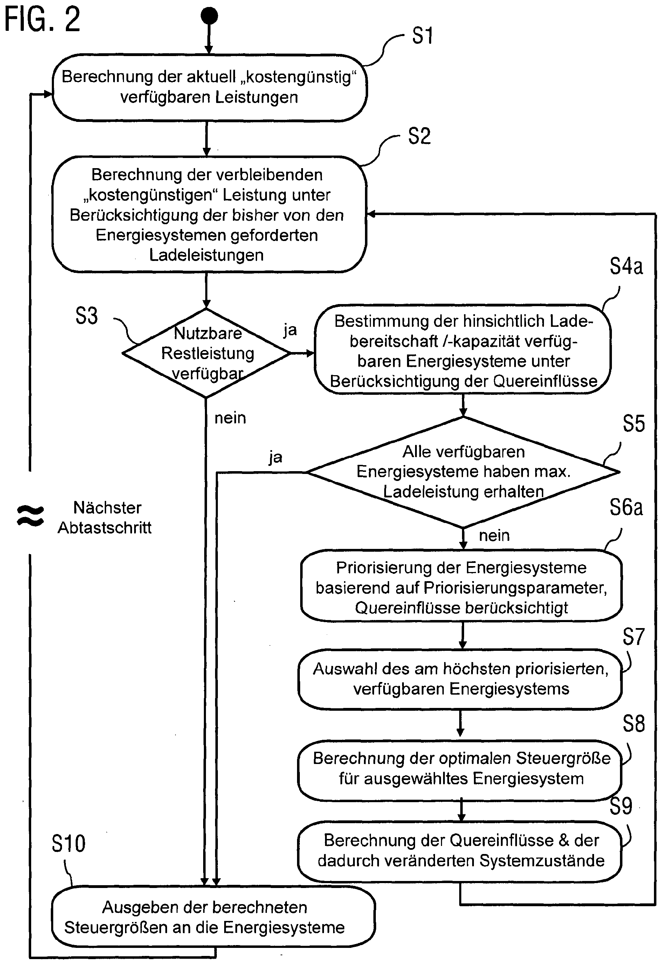

Figur 2 zeigt ein Ablaufdiagramm eines zweiten Ausführungsbeispiels der Erfindung. Die Besonderheit dieses Ausführungsbeispiels liegt darin, dass Quereinflüsse zwischen den Energiesystemen berücksichtigt werden.

Durch die Vernetzung der Energiesysteme verursacht die Ladevorgabe an das ausgewählte Energiesystem und der damit verbundene Eingriff in die Leistungsflüsse des Fahrzeugs in anderen Energiesystemen einen Quereinfluss. Durch diese Quereinflüsse können sich auch die Restzeiten (RTCs) und/oder die Wirkungsgrade dieser Energiesysteme verändern. Die Quereinflüsse zwischen den Energiesystemen werden vom Gesamtfahrzeug-Energiemanagement erfasst.

Die Berücksichtigung der Quereinflüsse erfolgt im Wesentlichen im Rahmen der Schritte S4a, S6a und S9. Die Schritte S1-S3, S5, S7, S8 und S10 entsprechen denen der Figur 1 und werden nicht gesondert beschrieben.

Bei der Ausführung gemäß der Figur 2 werden zunächst die Schritte S1 bis S8, wie im Zusammenhang mit Figur 1 beschrieben, durchgeführt. Beim ersten Durchlaufen der Schritte sind noch keine Quereinflüsse zu berücksichtigen, so dass die Schritte S4a und S6a wie die Schritte S4 und S6 der Figur 1 durchgeführt werden.

Nach der Berechnung der Leistungsanforderung für das in Schritt S8 ausgewählte Energiesystem erfolgt in Schritt S9 die Berechnung der Quereinflüsse mithilfe von hinterlegten Parametern, wobei für jeden Quereinfluss dessen Merkmale (z. B. Wirkrichtung des Quereinflusses) gespeichert sind. Die Merkmale der Quereinflüsse können auch als Kennlinien bzw. Kennfelder im Fahrzeug hinterlegt sein, mit welchen z. B. die Höhe des Quereinflusses abhängig von aktuellen Fahrzeuggrößen ermittelt werden kann. Die Kennfelder können vorab mit einem Fahrzeugmodell simuliert oder auf einem Prüfstand empirisch ermittelt werden. Zwischen zwei Energiesystemen kann dabei auch mehr als ein Quereinfluss bestehen.

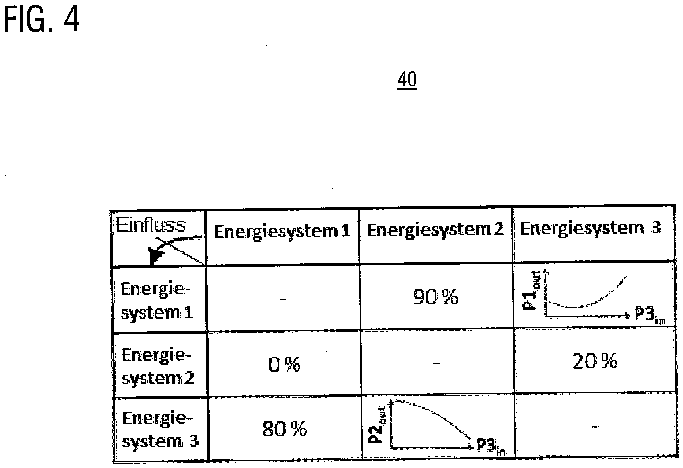

Die Quereinflüsse können in einer Matrix 40 (siehe Figur 4) erfasst und im Energiemanagementsystem des Fahrzeugs hinterlegt sein. Die Energiesysteme sind in den Zeilen und Spalten der Matrix 40 aufgeführt. In den Einträgen der Matrix sind die Merkmale der Quereinflüsse gespeichert.

Nachdem die Höhe der Quereinflüsse und die dadurch veränderten Systemzustände, wie z. B. veränderte Restzeiten, sowie die verbleibende, kostengünstige Leistung berechnet wurden, wird das Verfahren ein weiteres Mal durchlaufen.

In Schritt S4a erfolgt dann die Bestimmung der hinsichtlich Ladebereitschaft /-kapazität verfügbaren Energiesysteme unter Berücksichtigung der Quereinflüsse.

Die Berücksichtigung der Quereinflüsse in diesem Schritt ist insbesondere relevant, wenn zwei Energiesysteme die gleiche Energiequelle benutzen. Dies ist zum Beispiel beim Frontlüfter des Fahrzeugs der Fall: Das im Anwendungsbeispiel allgemein als Kühlsystem bezeichnete Energiesystem kann in mehrere Einzel-Energiesysteme getrennt werden: Kühlsystem für die Verbrennungskraftmaschine, Kühlsystem für Ladeluftkühlung, Kühlsystem für Hybrid-Komponenten usw.. Wenn nun eines dieser Energiesysteme im Rahmen des Verfahrens zur Optimierung der Leistungsflüsse ausgewählt wird und dieses den Frontlüfter (bzw. dessen Luftstrom) zum Laden seiner Energiespeicher nutzt, reduziert sich automatisch die Leistung, welche die anderen Energiesysteme vom Frontlüfter (bzw. von diesem erzeugten Luftstrom) abnehmen können. Im Extremfall nutzt das zuerst ausgewählte Energiesystem die Maximalleistung des Frontlüfters komplett alleine, in diesem Fall stehen die anderen Energiesysteme, welche ebenfalls den Frontlüfter als Energiequelle nutzen, nicht mehr zum Laden zur Verfügung.

Ebenso erfolgt die Priorisierung in Schritt S6a nun unter Berücksichtigung der Quereinflüsse, was nachfolgend anhand des in den Figuren 3A bis 3G beschriebenen Ausführungsbeispiels beispielhaft erläutert wird.

Wenn sich bei einem zweiten Durchlauf der Schritte S2 bis S9 des Verfahrens mit Berücksichtigung der Quereinflüsse die Restzeiten (RTCs) bzw. Wirkungsgrade der Energiesysteme aufgrund der Eingriffe in die Leistungsflüsse im ersten Durchlauf verändert haben, kann sich das Ergebnis dieser Priorisierung deutlich vom ersten Durchlauf des Verfahrens unterscheiden. Dadurch passt sich dieses Verfahren laufend an die sich verändernden Quereinflüsse an.

Das Verfahren wird so lange durchlaufen, bis die ursprüngliche Menge der kostengünstig verfügbaren Leistung auf alle Energiesysteme verteilt worden ist und/oder zumindest für alle verfügbaren Energiesysteme eine Ladeleistungsvorgabe berechnet wurde. Erst dann werden die berechneten Ladeleistungsanforderungen an die ausgewählten Energiesysteme ausgegeben.

In einem neuen Abtastschritt der Software wird wieder an den allerersten Schritt S1 des Verfahrens (Berechnung der kostengünstigen Leistung) gesprungen, und das Verfahren wird komplett von neuem durchlaufen.

Die Figuren 3A bis 3G illustrieren eine Aufteilung der zur Verfügung stehenden Leistung gemäß einem Ausführungsbeispiel der Erfindung.

Die in den Leistungsfluss-Diagrammen dargestellten Leistungen, Quereinflüsse und Verläufe sind nur beispielhaft zu verstehen. Manche Effekte sind im Vergleich zur Realität überdimensioniert dargestellt, um deren Auswirkungen auf das Verfahren darzustellen.

Dem Ausführungsbeispiel liegt weiterhin der beispielhafte Anwendungsfall des Nutzfahrzeugs zu Grunde, das in eine Gefällestrecke einfährt, woraufhin der Fahrer für den Schubbetrieb eine Soll-Bremsleistung der Dauerbremsen, z. B. hydraulischer Retarder, einstellt.

Das Nutzfahrzeug ist nur rein verbrennungsmotorisch antreibbar. Bei dem Nutzfahrzeug können die folgenden, an sich bekannten Energiesysteme für ein Energiemanagement genutzt werden: ein Druckluftsystem 10, ein Kühlsystem 20, ein Klimasystem 30 und ein elektrisches 24 V-System (Bordnetz) 40.

Das Druckluftsystem 10 umfasst einen Luftpresser 11 als Nebenaggregat und einen Drucklufttank 12 als Energiespeicher. Der Verbraucher 13 kann ein druckluftbetriebenes Türsystem und/oder Bremssystem sein.

Das Kühlsystem 20 umfasst einen Lüfter 21 als Nebenaggregat, einen thermischen Energiespeicher 22 zur Speicherung der thermischen Energie des Kühlsystems 20, z. B. in Form der thermischen Masse des Kühlsystems 20, und wiederum einen Verbraucher 23, der mit dem Kühlsystem 20 temperiert wird (z. B. Brennkraftmaschine).

Das Klimasystem 30 umfasst einen Klimakompressor 31 als Nebenaggregat, einen Verbraucher 43 (z. B. Sonneneinstrahlung in den Fahrzeuginnenraum) und einen thermischen Energiespeicher 32, z. B. in Form des Fahrzeuginnenraums.

Das elektrische Bordnetz 40 umfasst eine Lichtmaschine 41 als Nebenaggregat und eine 24 V-Starterbatterie 42 als elektrischen Energiespeicher sowie elektrische Verbraucher 43.

Die Nebenaggregate 11, 21, 31 und 41 werden über die Hauptantriebswelle der Brennkraftmaschine mit Leistung versorgt.

Dicke schwarze Pfeile in den Figuren 3A bis 3G stellen jeweils einen Leistungsfluss dar. Die Dicke der Pfeile soll dabei eine Stärke des jeweiligen Leistungsflusses anzeigen.

Mit dem Pfeil 1 soll schematisch die in der Schubphase kostengünstig zur Verfügung stehende Leistung dargestellt werden. In Figur 3A wurde dieser Leistungsfluss noch nicht den Energiesystemen 10, 20, 30, 40 zugeteilt.

Die von den Verbrauchern 13, 23, 33, 43 nach unten gerichteten schwarzen Pfeile geben die aktuelle Verbraucherleistung an, z. B: die aktuelle Verbraucherleistung 13 im Druckluftsystem 10. Die Verbraucher 13, 23, 33, 43 werden aktuell aus den jeweiligen Energiespeichern 12, 22, 32, 42 gespeist. So wird z. B. der Druckluftverbraucher 13 vom Druckluftspeicher 12 in Höhe der aktuellen Verbraucherleistung 13 mit Druckluft 16 versorgt, was durch Pfeile 15, 16 gleicher Dicke dargestellt ist.

Bei der Verteilung der Leistung 1 werden die Energiesysteme in diesem Beispiel zuerst auf Basis der Restzeit (RTC, restliche Zeit bis zum Eintritt einer Ladezwangsbedingung) priorisiert. Diese wird aus dem aktuellen Ladezustand und der Leistung der Verbraucher für jedes Energiesystem mittels einer an sich bekannten Ladezustandsprädiktion berechnet. Der Verlauf der jeweiligen Ladezustandsprädiktion jedes Energiespeichers 12, 22, 32, 42 ist mittels der Kurven 15, 25, 35, 45 illustriert.

Figur 3A zeigt die Ausgangssituation vor dem ersten Durchlauf des Verfahrens gemäß Figur 2. Die Priorisierung der Energiesysteme anhand der RTCs in Schritt S6a ist ebenfalls dargestellt. Die RTC für das Druckluftsystem 10 (RTC_Druckluft 14) ist kleiner als die RTC für das Klimasystem 30 (RTC_Klima 34), die wiederum kleiner ist als die RTC des Kühlsystems 20 (RTC_Kühlung 24), die wiederum kleiner ist als die RTC für das elektrische 24 V-System 40 (RTC_24V 44): RTC_Druckluft 14 < RTC_Klima 34 < RTC_Kühlung 24 < RTC_24V 44.

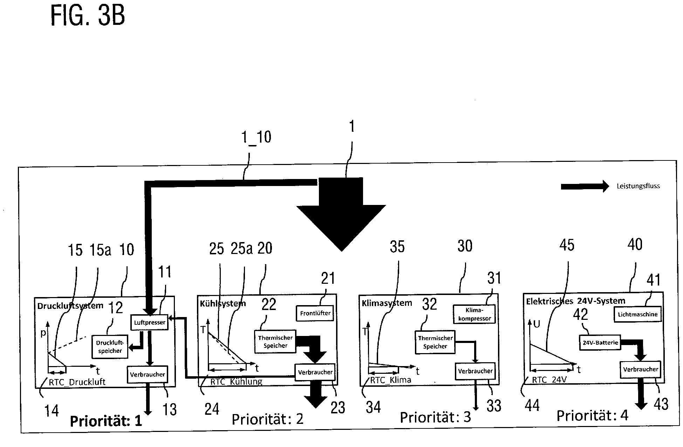

Da es am höchsten priorisiert ist, wird dem Druckluftsystem 10 als erstem Energiesystem ein Teil 1_10 der kostengünstigen Leistung 1 zum Laden seines Energiespeichers (Druckluftspeicher 12) zugeteilt, was in Figur 3B schematisch dargestellt ist. Die kostengünstig verfügbare Leistung 1 reduziert sich entsprechend der Aufnahmeleistung 1_10 des Luftpressers 11.

Da der Luftpresser 11 in diesem Beispiel nur eine Leistungsstufe besitzt, entspricht die dem Druckluftsystem 10 zugeteilte Leistung dessen maximaler Ladeleistung. Durch die Aktivierung des Luftpressers 11 ergibt sich ein Quereinfluss auf das Kühlungssystem 20, da der Luftpresser 11 gekühlt werden muss. Dieser Quereinfluss wird durch das Verfahren schon prädiktiv, d. h. bei der Planung der Leistungsverteilung, berücksichtigt, noch bevor der Quereinfluss effektiv auftritt.

Aufgrund des Quereinflusses ändert sich die Ladezustandsprädiktion des Kühlsystems 20 von der Kurve 25 auf die Kurve 25a und somit die Restzeit (RTC) 24 des Kühlsystems 20, daher verändert sich auch die Priorisierung der Energiesysteme (RTC_Kühlung_neu 24 < RTC_Klima 34. Folglich erhält das Kühlsystem nun die zweithöchste Priorität.

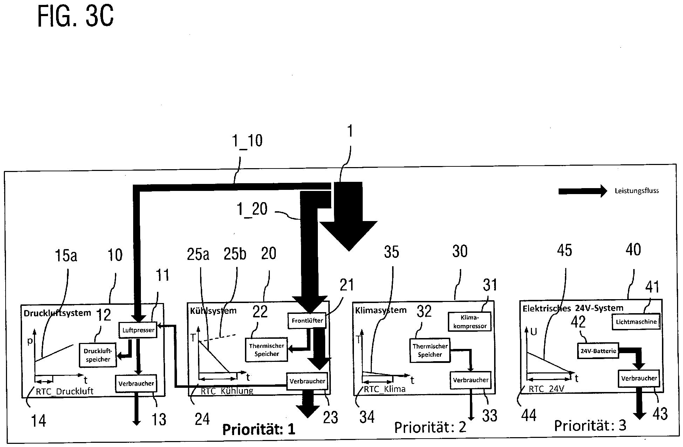

Wie in Figur 3c dargestellt, erhält folglich das Kühlsystem nach dem Druckluftsystem 10 als zweites Energiesystem einen Teil 10_2 der verbleibenden kostengünstigen Leistung 1, da es im zweiten Durchlauf der Schleife S2 bis S9 des Verfahrens in Figur 2 die höchste Priorität besitzt. Dem Druckluftsystem 10 wurde im ersten Durchlauf bereits die Leistung 10_1 zugewiesen.

Die Soll-Leistung für das Kühlsystem 20 entspricht nicht der maximalen Ladeleistung (diese wäre sehr hoch), sondern es wird dem Kühlsystem 20 im ersten Schritt nur eine parametrierte Leistung zugeteilt, welche ausreicht, um in den Energiespeicher 22 des Kühlsystems in einer bestimmten Zeit eine gewisse Energiemenge zu laden. Somit wird eine Ladezwangsbedingung in naher Zukunft verhindert. Wie auch schon beim ersten Durchlauf der Verfahrensschritte reduziert sich die kostengünstig verfügbare Leistung 1 entsprechend der Aufnahmeleistung 1_20 des Frontlüfters 21. Die Ladezustandsprädiktion ändert sich auf die Kurve 25b.

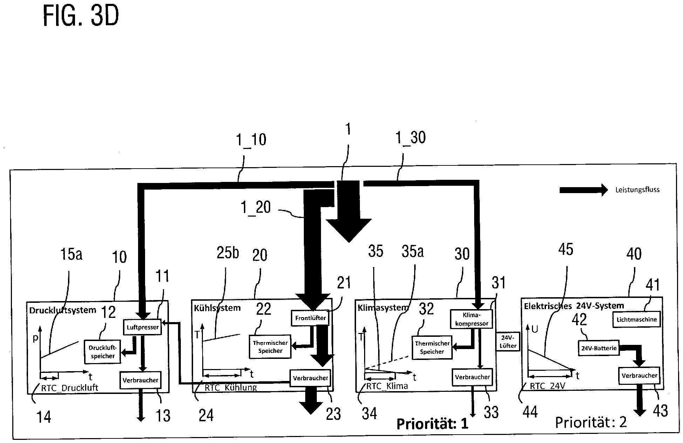

Im dritten Durchlauf der Schleife der Verfahrensschritte S2 bis S9 ist das Klimasystem 20 das am höchsten priorisierte Energiesystem, daher erhält es als nächstes einen Teil 1_30 der verbleibenden kostengünstigen Leistung 1 (siehe Figur 3D). In diesem Beispiel ist der Klimakompressor nicht in seiner Leistung verstellbar (nur Leistungsstufen "Aus" und "Maximalleistung" möglich), daher entspricht die zugeteilte Leistung der maximalen Ladeleistung des Klimasystems. Die Ladezustandsprädiktion ändert sich demzufolge von 35 auf 35a.

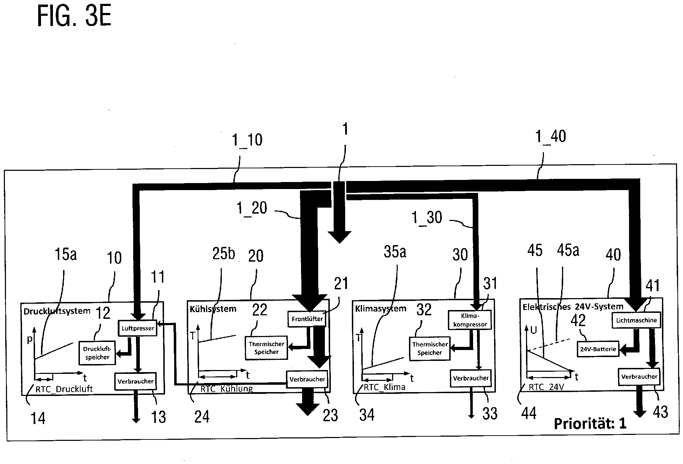

Zu Beginn des vierten Durchlaufs der Schleife der Verfahrensschritte S2 bis S9 wurde dem elektrischen 24 V-System 40 als letztem Energiesystem noch keine Ladeleistung zugeteilt, daher ist es nun am höchsten priorisiert und erhält dementsprechend einen Teil 1_40 der verbleibenden Leistung 1 (siehe Figur 3E). Das 24 V-System wird nicht mit maximaler Leistung geladen, sondern mit einer parametrierten Leistungsstufe, mit welcher der Energiespeicher 42 (24 V-Batterie) in einer parametrierten Zeit mit einer gewissen Energiemenge geladen wird, um so eine Ladezwangsbedingung zu verhindern. Auch hier ändert sich somit die Kurve der Ladezustandsprädiktion von 45 auf 45a.

Zu Beginn des nächsten Durchlaufs der Schleife der Verfahrensschritte S2 bis S9 haben alle Energiesysteme einen Teil der kostengünstigen Leistung erhalten, der jeweils ausreicht, um die Energiesysteme in einem ausreichendem Maß zur Verhinderung einer Ladezwangsbedingung zu laden.

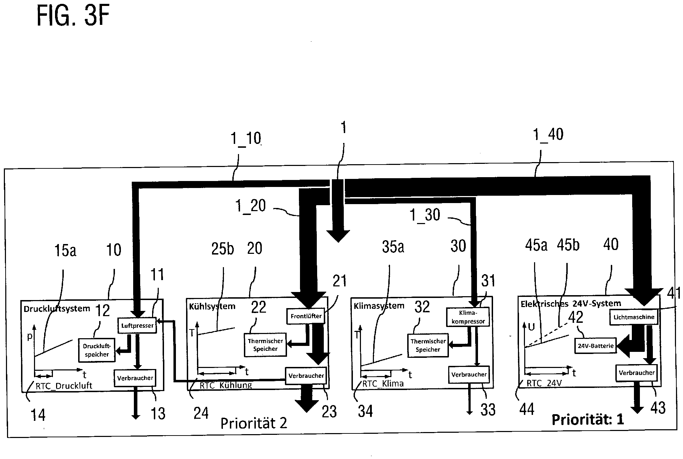

In diesem Beispiel ist auch danach noch kostengünstige, nicht zugeteilte Leistung verfügbar, dargestellt durch den dünneren Pfeil 1 in den Figuren 3E und 3F. Diese soll wirkungsgradoptimal genutzt werden. Daher ist bei dem folgenden Durchlauf der Verfahrensschritte S2 bis S9 nicht die RTC, sondern der Wirkungsgrad bei der Priorisierung der Energiesysteme 10, 20, 30, 40 entscheidend. In diesem Beispiel hat das 24 V-Energiesystem 40 den höchsten Wirkungsgrad, daher wird diesem System weitere Leistung bis zur maximalen Ladeleistung des Systems zugeteilt (siehe Figur 3F). Dem Druckluftsystem 10 und dem Klimasystem 30 wurde bereits eine Leistung in Höhe ihrer maximalen Leistung zugeteilt, daher stehen sie nicht mehr für eine zusätzliche Ladung zur Verfügung.

Nachdem dem elektrischen 24 V-System 40 bis zu seiner maximalen Leistungsfähigkeit Leistung 1_40 zugeteilt wurde, ist noch ein Rest 1 kostengünstiger Leistung verfügbar. Diese wird dem Kühlsystem 30 als letztem zum Laden verfügbaren Energiesystem zugeteilt. Somit wird die zur Verfügung stehende kostengünstige Leistung 1 vollständig ausgenutzt.

Erst danach wird das wiederholte Durchlaufen der Verfahrensschritte S2 bis S9 beendet, und es werden die entsprechenden Steuergrößen in Form der zugeteilten Ladeleistungen an die Energiesysteme 10, 20, 30, 40 ausgegeben. In einem neuen Abtastschritt der Software wird das Verfahren erneut durchlaufen, wodurch sich das Gesamtfahrzeug-Energiemanagement an veränderte Systemzustände anpasst.

Durch das Verfahren kann kostengünstig zur Verfügung stehende Leistung vollständig genutzt werden, um die Energiespeicher von Energiesystemen zu laden, wodurch Kraftstoff gespart wird. Das Verfahren nutzt die kostengünstig verfügbare Leistung, um priorisiert die Energiesysteme zu laden, welche aktuell den dringendsten Energiebedarf besitzen. Durch die Berücksichtigung der Quereinflüsse zwischen den Energiesystemen wird ein größeres Einsparpotential erreicht als bei einem Energiemanagement ohne Berücksichtigung der Quereinflüsse. Ferner kann durch das Verfahren unter Ausnutzung kostengünstiger Leistung die Zeit bis zum Eintritt einer Zwangsbedingung über alle Energiesysteme weg erhöht werden. Dadurch können sich die Energiesysteme des Fahrzeugs öfter rein aus ihren Energiespeichern versorgen, wodurch z. B. ein häufigeres Abstellen des Verbrennungsmotors (Stopp-Start-Betrieb, rein elektrisches Fahren bei Hybrid-Fahrzeugen) möglich wird.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Kostengünstig verfügbare Leistung im Antriebsstrang
- 1_10: Dem Druckluftsystem zugeordnete Leistung
- 1_20: Dem Kühlsystem zugeordnete Leistung
- 1_30: Dem Klimasystem zugeordnete Leistung
- 1_40: Dem Bordnetz zugeteilte elektrische Leistung
- 10: Druckluftsystem
- 11: Luftpresser
- 12: Druckluftspeicher
- 13: Verbraucher
- 14: RTC_Druckluft
- 15: Aktuelle Verbraucherleistung
- 15, 15a: Ladezustandsprädiktionskurve
- 16: Leistungsfluss aus Druckluftspeicher zum Verbraucher
- 20: Kühlsystem
- 21: Frontlüfter
- 22: Thermischer Speicher
- 23: Verbraucher
- 24: RTC_Kühlung
- 25, 25a, 25b, 25c: Ladezustandsprädiktionskurve
- 30: Klimasystem
- 31: Klimakompressor
- 32: Thermischer Speicher
- 33: Verbraucher
- 34: RTC_Klima
- 35, 35a: Ladezustandsprädiktionskurve
- 40: Bordnetz
- 41: Lichtmaschine
- 42: 24 V-Batterie
- 43: Verbraucher
- 44: RTC_24V
- 45, 45a, 45b: Ladezustandsprädiktionskurve

## Patentansprüche

1. Verfahren zur Steuerung von Leistungsflüssen in einem Kraftfahrzeug zur verbrauchsoptimierten Versorgung mehrerer Energiesysteme des Kraftfahrzeugs, wobei die mehreren Energiesysteme zumindest zwei der folgenden Energiesysteme umfassen: ein Druckluftsystem (10), ein Kühlsystem (20), ein Klimasystem (30) und ein Bordnetz (40) mit einem elektrischen Energiespeicher (42), wobei in Fahrsituationen des Kraftfahrzeugs, in denen Leistung (1) kostengünstig zur Verfügung steht, beispielsweise bei einem Schubbetrieb und/oder einer Fahrt im Teillastbetrieb bei einer Lastpunkterhöhung der Brennkraftmaschine, eine Leistungsaufnahme zumindest eines der Energiesysteme erhöht wird, um die in dem wenigstens einen Energiesystem gespeicherte Energie zu erhöhen, wobei die kostengünstig zur Verfügung stehende Leistung (1) in Abhängigkeit von einer Priorisierung (S6; S6a) der Energiesysteme auf die Energiesysteme verteilt wird, wobei
die Priorisierung (S6a) in Abhängigkeit von prädizierten Quereinflüssen (S9) zwischen den Energiesystemen bestimmt wird, wobei die Quereinflüsse angeben, wie stark ein Leistungsfluss in jeweils einem der Energiesysteme die Leistungsflüsse in den anderen Energiesystemen beeinflusst; **dadurch gekennzeichnet,**
**dass** für jedes Energiesystem eine Restzeit bestimmt wird, die eine aktuell verbleibende Zeit bis zum Eintritt einer Zwangsladebedingung eines Energiespeichers des jeweiligen Energiesystems angibt, wobei eine Ladezwangsbedingung des jeweiligen Energiespeichers (12, 22, 32, 42) eintritt, wenn ein Ladezustand des Energiespeichers (12, 22, 32, 42) einen vorbestimmten Ladezustands-Schwellenwert unterschreitet und das Unterschreiten dieses Ladezustands-Schwellenwerts einen Ladevorgang des Energiespeichers auslöst, wobei die Priorisierung (S6; S6a) in Abhängigkeit von den bestimmten Restzeiten erfolgt.

2. Verfahren nach Anspruch 1, **dadurch gekennzeichnet, dass** für jedes Energiesystem ein Wirkungsgrad bestimmt wird, der angibt, mit welchem Wirkungsgrad ein Energiespeicher (12, 22, 32, 42) des jeweiligen Energiesystems einen aktuell verfügbaren Leistungsfluss zum Aufladen des Energiespeichers nutzen kann, wobei die Priorisierung (S6; S6a) in Abhängigkeit der bestimmten Wirkungsgrade erfolgt.

3. Verfahren nach einem der vorhergehenden Ansprüche, **dadurch gekennzeichnet, dass** die Verteilung der kostengünstig zur Verfügung stehenden Leistungen in Abhängigkeit von einer Priorisierung der Energiesysteme die folgenden Schritte umfasst, deren Abfolge solange wiederholt durchlaufen wird, bis die zur Verfügung stehende Leistung (1) vollständig auf die Energiesysteme aufgeteilt ist:
a) Berechnung der kostengünstig zur Verfügung stehenden Leistungen abzüglich der aktuell von den Energiesystemen angeforderten Soll-Ladeleistungsanforderungen (S1, S2);
b) Bestimmung der hinsichtlich Ladebereitschaft und Ladekapazität verfügbaren Energiesysteme, denen noch nicht ihre maximale Ladeleistung als Soll-Ladeleistungsanforderung zugeteilt wurde (S4; S4a);
c) Priorisierung der bestimmten verfügbaren Energiesysteme in Abhängigkeit von wenigstens den im Anspruch 1 genannten Priorisierungsparametern (S6; S6a);
d) Auswahl des am höchsten priorisierten verfügbaren Energiesystems (S7); und
e) Berechnung einer Soll-Ladeleistungsanforderung für das ausgewählte Energiesystem (S8).

4. Verfahren nach Anspruch 3, **dadurch gekennzeichnet,**
(a) **dass** in Abhängigkeit von den bestimmten Quereinflüssen Systemzustandsänderungen in den Energiesystemen bestimmt werden (S9); und
(b) **dass** die Bestimmung der hinsichtlich Ladebereitschaft und Ladekapazität verfügbaren Energiesysteme (S4a) und die Priorisierung der verfügbaren Energiesysteme (S6a) jeweils in Abhängigkeit von den bestimmten Systemzustandsänderungen erfolgt.

5. Verfahren nach einem der vorhergehenden Ansprüche, **dadurch gekennzeichnet,**
(a) **dass** die möglichen Quereinflüsse zwischen jeweils zwei Energiesystemen in Form eines vorbestimmten festen Werts und/oder in Form eines hinterlegten Kennfeldes, der bzw. das die Leistungsflusskopplung in Abhängigkeit von wenigstens einem Betriebsparameter festlegt, bestimmt werden, wobei für jeden Quereinfluss dessen Wirkrichtung und vorzugweise dessen Höhe bestimmt wird; und/oder
(b) **dass** die möglichen Quereinflüsse zwischen den Energiesystemen in Form einer Berechnungsmatrix (40) hinterlegt sind, wobei die Einträge der Matrix (40) jeweils eine Leistungsflusskopplung zwischen zwei Energiesystemen festlegt.

6. Verfahren nach einem der vorhergehenden Ansprüche, **dadurch gekennzeichnet, dass** die Fahrsituationen des Kraftfahrzeugs, in denen Leistung kostengünstig zur Verfügung steht,
(a) einen Schubbetrieb des Kraftfahrzeugs umfassen; und/oder
(b) eine Fahrt im Teillastbereich mit einer Lastpunkterhöhung eines Verbrennungsmotors des Kraftfahrzeugs umfassen, wobei der Verbrennungsmotor in einem Kennfeldbereich mit einem günstigeren Wirkungsgrad betrieben wird und die das Fahrerwunschmoment übersteigende erzeugte Leistung als kostengünstig zur Verfügung stehende Leistung auf die Energiesysteme verteilt wird; und/oder
(c) einen Dauerbremsbetrieb eines Nutzfahrzeugs umfassen; und/oder
(d) einen Bremsrekuperationsbetrieb eines Hybridfahrzeugs umfassen, bei dem ein negatives Fahrerwunschmoment zumindest teilweise von einer im generatorischen Betrieb arbeitenden elektrischen Maschine aufgebracht wird; und/oder
(e) Fahrsituationen umfassen, in denen bei einem nur rein verbrennungsmotorisch betreibbaren Fahrzeug zur Bereitstellung von Leistung kein Kraftstoff und/oder verhältnismäßig wenig Kraftstoff eingesetzt werden muss; und/oder
(f) Fahrsituationen umfassen, in denen bei einem Hybridfahrzeug zur Bereitstellung von Leistung kein Kraftstoff und keine gespeicherte elektrische Energie und/oder verhältnismäßig wenig Kraftstoff und gespeicherte elektrische Energie eingesetzt werden müssen.

7. Verfahren nach einem der vorhergehenden Ansprüche, **dadurch gekennzeichnet,**
(a) **dass** das Kraftfahrzeug nur verbrennungsmotorisch antreibbar ist; und
(b) **dass** die Energiesysteme jeweils ein Nebenaggregat (11, 21, 31, 41) aufweisen, das über die Hauptantriebswelle der Brennkraftmaschine mit Leistung versorgt wird.

8. Verfahren nach einem der vorhergehenden Ansprüche, **dadurch gekennzeichnet, dass** die Energiesysteme mindestens zwei der folgenden Energiesysteme umfassen:
(a) ein Druckluftsystem (10), aufweisend einen Luftpresser (11) als Nebenaggregat und einen Drucklufttank (12) als Energiespeicher;
(b) ein Kühlsystem (20), aufweisend einen Lüfter (21) als Nebenaggregat und einen thermischen Energiespeicher (22) zur Speicherung der thermischen Energie des Kühlsystems (20);
(c) ein Klimasystem (30), aufweisend einen Klimakompressor (31) als Nebenaggregat und einen thermischen Energiespeicher (32) umfassend einen Fahrzeuginnenraum zur Speicherung der thermischen Energie des Klimasystems (30); und
(d) ein elektrisches Bordnetz (40), aufweisend eine Lichtmaschine (41) als Nebenaggregat und einen Akkumulator (42) als elektrischen Energiespeicher.

9. Steuervorrichtung zur Steuerung von Leistungsflüssen in einem Kraftfahrzeug zur verbrauchsoptimierten Versorgung mehrerer Energiesysteme des Kraftfahrzeugs, wobei die Steuervorrichtung eingerichtet ist, das Verfahren nach einem der Ansprüche 1 bis 8 auszuführen.

10. Kraftfahrzeug, insbesondere Nutzfahrzeug, aufweisend eine Steuervorrichtung nach Anspruch 9, sowie zumindest zwei der folgenden Energiesysteme: ein Druckluftsystem (10), ein Kühlsystem (20), ein Klimasystem (30) und ein Bordnetz (40) mit einem elektrischen Energiespeicher (42).

## Claims

1. Method for controlling power flows in a motor vehicle for supplying several energy systems of the motor vehicle in a consumption-optimized manner, wherein the several energy systems comprise at least two of the following energy systems: a compressed air system (10), a cooling system (20), an air conditioning system (30) and an on-board electrical system (40) with an electrical energy store (42), wherein in driving situations of the motor vehicle in which power (1) is available at low cost, for example during a coasting operation and/or a drive in partial load operation when the load point of the internal combustion engine is increased, a power consumption of at least one of the energy systems is increased in order to increase the energy stored in the at least one energy system, wherein the power (1) that is available at low cost is distributed to the energy systems dependent on a prioritization (S6; S6a) of the energy systems, wherein
the prioritization (S6a) is determined dependent on predicted cross influences (S9) between the energy systems, wherein the cross influences indicate how strongly a power flow in a respective one of the energy systems influences the power flows in the other energy systems; **characterized in that**
a residual time is determined for each energy system, which indicates a currently remaining time until the occurrence of a forced loading condition of an energy store of the respective energy system, wherein a forced loading condition of the respective energy store (12, 22, 32, 42) occurs when a storage state of the energy store (12, 22, 32, 42) falls below a predetermined storage state threshold value and the falling below of this storage state threshold value triggers a loading process of the energy store, wherein the prioritization (S6; S6a) is performed dependent on the determined residual times.

2. Method according to claim 1, **characterized in that** an energy conversion efficiency is determined for each energy system, which indicates with which energy conversion efficiency an energy store (12, 22, 32, 42) of the respective energy system can use a currently available power flow to load the energy store, wherein the prioritization (S6; S6a) is performed dependent on the determined energy conversion efficiencies.

3. Method according to one of the preceding claims, **characterized in that** the distribution of the low-cost available power as a function of a prioritization of the energy systems comprises the following steps, the sequence of which is run through repeatedly until the available power (1) is completely distributed to the energy systems:
(a) calculation of the low-cost available power minus the target loading power requirements (S1, S2) currently requested by the energy systems;
b) determination of the energy systems available in terms of loading readiness and loading capacity, which have not yet been allocated their maximum loading power as a target loading power requirement (S4; S4a);
c) prioritization of the determined available energy systems, depending on at least the prioritization parameters mentioned in claim 1 (S6; S6a);
d) selection of the highest prioritized available energy system (S7); and
e) calculation of a target loading power requirement for the selected energy system (S8).

4. Method according to claim 3, **characterized in that**
(a) system state changes in the energy systems are determined dependent on the determined cross influences (S9); and
(b) **in that** the determination of the energy systems (S4a) available in terms of loading readiness and loading capacity and the prioritization of the available energy systems (S6a) are each carried out as a function of specific system state changes.

5. Method according to one of the preceding claims, **characterized in that**
(a) the possible cross influences between two respective energy systems are determined in the form of a predetermined fixed value and/or in the form of a stored characteristic map, which determines the power flow coupling dependent on at least one operating parameter, wherein for each cross influence its direction of action and preferably its magnitude is determined; and/or
(b) that the possible cross influences between the energy systems are stored in the form of a calculation matrix (40), wherein the entries of the matrix (40) each define a power flow coupling between two energy systems.

6. Method according to one of the preceding claims, **characterized in that** the driving situations of the motor vehicle, in which power is available at low cost,
(a) comprise a coasting mode of the motor vehicle; and/or
(b) comprise a drive in the partial load range with a load point increase of an internal combustion engine of the motor vehicle, wherein the internal combustion engine is operated in a characteristic map range with a more favorable energy conversion efficiency and the power generated in excess of the driver's desired torque is distributed to the energy systems as power available at low cost; and/or
(c) comprise a continuous braking operation of a commercial vehicle; and/or
(d) comprise a brake recuperation mode of a hybrid vehicle in which a negative driver's desired torque is at least partially applied by an electric machine operating in regenerative mode; and/or
(e) comprise driving situations in which no fuel and/or relatively little fuel must be used to provide power in a vehicle that can only be operated with a purely internal combustion engine; and/or
(f) comprise driving situations in which no fuel and no stored electrical energy and/or relatively little fuel and stored electrical energy need to be used to provide power in a hybrid vehicle.

7. Method according to one of the preceding claims, **characterized in that**
(a) the motor vehicle can only be driven by an internal combustion engine; and
(b) **in that** the energy systems each have an auxiliary unit (11, 21, 31, 41) which is supplied with power via the main drive shaft of the internal combustion engine.

8. Method according to one of the preceding claims, **characterized in that** the energy systems comprise at least two of the following energy systems:
(a) a compressed air system (10), comprising an air compressor (11) as an auxiliary unit and a compressed air tank (12) as an energy storage unit;
(b) a cooling system (20), comprising a fan (21) as an auxiliary unit and a thermal energy store (22) for storing the thermal energy of the cooling system (20);
(c) an air conditioning system (30), comprising an air conditioning compressor (31) as an auxiliary unit and a thermal energy store (32) comprising a vehicle interior for storing the thermal energy of the air conditioning system (30); and
(d) an on-board electrical system (40), comprising an alternator (41) as an auxiliary unit and an accumulator (42) as an electrical energy store.

9. Control device for controlling power flows in a motor vehicle for supplying several energy systems of the motor vehicle in a consumption-optimized manner, wherein the control device is configured to perform the method according to one of claims 1 to 8.

10. Motor vehicle, in particular a commercial vehicle, comprising a control device according to claim 9 and at least two of the following energy systems: a compressed air system (10), a cooling system (20), an air conditioning system (30) and an on-board electrical system (40) with an electrical energy storage device (42).

## Revendications

1. Procédé de commande de flux de puissance dans un véhicule automobile en vue de l'alimentation optimisé en fonction de la consommation de plusieurs systèmes d'énergie du véhicule automobile, les plusieurs systèmes d'énergie comprenant au moins deux des systèmes d'énergie suivants : un système d'air comprimé (10), un système de refroidissement (20), un système de climatisation (30) et un réseau de bord (40) pourvu d'un accumulateur d'énergie (42) électrique, une puissance absorbée d'au moins l'un des systèmes d'énergie étant augmentée dans les situations de déplacement du véhicule automobile dans lesquelles de la puissance (1) est disponible de manière économique, par exemple lors d'un régime de poussée et/ou d'un déplacement en régime de charge partielle lors d'une augmentation du point de charge du moteur thermique, afin d'augmenter l'énergie accumulée dans l'au moins un système d'énergie, la puissance (1) disponible de manière économique étant distribuée sur le système d'énergie en fonction d'une priorisation (S6 ; S6a) des systèmes d'énergie, la priorisation (S6a) étant déterminée en fonction d'influences croisées (S9) prédites entre les systèmes d'énergie, les influences croisées indiquant à quelle intensité un flux de puissance respectivement dans l'un des systèmes d'énergie influence les flux de puissance dans les autres systèmes d'énergie ; **caractérisé en ce**
**qu'**un temps restant est déterminé pour chaque système d'énergie, lequel indique un temps restant actuellement jusqu'au passage à une condition de charge forcée d'un accumulateur d'énergie du système d'énergie respectif, un condition de charge forcée de l'accumulateur d'énergie (12, 22, 32, 42) respectif se produisant lorsqu'un état de charge de l'accumulateur d'énergie (12, 22, 32, 42) devient inférieur à une valeur de seuil d'état de charge prédéterminée et que le franchissement vers le bas de cette valeur de seuil d'état de charge déclenche une opération de charge de l'accumulateur d'énergie, la priorisation (S6 ; S6a) étant effectuée en fonction des temps restants déterminés.

2. Procédé selon la revendication 1, **caractérisé en ce qu'**un taux de rendement est déterminé pour chaque système d'énergie, taux de rendement avec lequel un accumulateur d'énergie (12, 22, 32, 42) du système d'énergie respectif peut utiliser un flux de puissance actuellement disponible pour charger l'accumulateur d'énergie, la priorisation (S6 ; S6a) étant effectuée en fonction des taux de rendement déterminés.

3. Procédé selon l'une des revendications précédentes, **caractérisé en ce que** la distribution des puissances disponibles de manière économique en fonction d'une priorisation des systèmes d'énergie comprend les étapes suivantes, dont la séquence est parcourue de manière répétitive jusqu'à ce que la puissance (1) disponible est entièrement répartir sur les systèmes d'énergie :
a) calcul des puissances disponibles de manière économique moins les demandes de puissance de charge de consigne actuellement demandées par les systèmes d'énergie (S1, S2) ;
b) détermination des systèmes d'énergie disponibles du point de vue de la disponibilité pour la charge et la capacité de charge auxquels leur puissance de charge maximale n'a pas encore été attribuée en tant que demande de puissance de charge de consigne (S4 ; S4a) ;
c) priorisation des systèmes d'énergie disponibles déterminés en fonction d'au moins les paramètres de priorisation nommés dans la revendication 1 (S6 ; S6a) ;
d) sélection du système d'énergie disponible ayant la priorité la plus élevée (S7) ; et
e) calcul d'une demande de puissance de charge de consigne pour le système d'énergie sélectionné (S8).

4. Procédé selon la revendication 3, **caractérisé en ce**
a) **que** des changements d'état de système dans les systèmes d'énergie sont déterminés en fonction des influences croisées déterminées (S9) ;
b) **que** la détermination des systèmes d'énergie disponibles du point de vue de la disponibilité pour la charge et la capacité de charge (S4a) et la priorisation des systèmes d'énergie disponibles (S6a) s'effectuent respectivement en fonction des changements d'état de système déterminés.

5. Procédé selon l'une des revendications précédentes, **caractérisé en ce**
a) **que** les influences croisées possibles entre respectivement deux systèmes d'énergie sont déterminées sous la forme d'une valeur fixe prédéterminée et/ou sous la forme d'un diagramme caractéristique consigné, laquelle ou lequel spécifie le couplage du flux de puissance en fonction d'au moins un paramètre de fonctionnement, sa direction d'action et de préférence son niveau étant déterminées pour chaque influence croisée ; et/ou
b) **que** les influences croisées possibles entre les systèmes d'énergie sont consignées sous la forme d'une matrice de calcul (40), les entrées de la matrice (40) spécifiant respectivement un couplage du flux de puissance entre deux systèmes d'énergie.

6. Procédé selon l'une des revendications précédentes, **caractérisé en ce que** les situations de déplacement du véhicule automobile dans lesquelles de la puissance est disponible de manière économique
a) comprennent un régime de poussée du véhicule automobile ; et/ou
b) comprennent un déplacement en régime de charge partielle avec une augmentation du point de charge d'un moteur à combustion du véhicule automobile, le moteur à combustion fonctionnant dans une plage de diagramme caractéristique avec un taux de rendement le plus favorable et la puissance générée qui dépasse le moment souhaité par le conducteur étant distribuée en tant que puissance disponible de manière économique sur les systèmes d'énergie ; et/ou
c) comprennent un régime de freinage continu d'un véhicule utilitaire ; et/ou
d) comprennent un régime de récupération de freinage d'un véhicule hybride, avec lequel un moment souhaité du conducteur négatif est appliqué au moins partiellement par une machine électrique qui fonctionne en régime de générateur ; et/ou
e) comprennent des situations de déplacement dans lesquelles, dans le cas d'un véhicule ne pouvant fonctionner qu'avec un moteur purement à combustion, aucun carburant et/ou relativement peu de carburant ne doit être utilisé pour la mise à disposition de puissance ; et/ou
f) comprennent des situations de déplacement dans lesquelles, dans le cas d'un véhicule hybride, aucun carburant et aucune énergie électrique accumulée et/ou relativement peu de carburant et d'énergie électrique accumulée ne doivent être utilisés pour la mise à disposition de puissance.

7. Procédé selon l'une des revendications précédentes, **caractérisé en ce**
a) **que** le véhicule automobile ne peut être propulsé qu'avec un moteur à combustion ; et
b) **que** les systèmes d'énergie possèdent respectivement un groupe auxiliaire (11, 21, 31, 41) qui est alimenté en puissance par le biais de l'arbre d'entraînement principal du moteur thermique.

8. Procédé selon l'une des revendications précédentes, **caractérisé en ce que** les systèmes d'énergie comprennent au moins deux des systèmes d'énergie ci-après :
a) un système d'air comprimé (10), possédant un compresseur d'air (11) en tant que groupe auxiliaire et un réservoir à air comprimé (12) en tant qu'accumulateur d'énergie ;
b) un système de refroidissement (20), possédant un ventilateur (21) en tant que groupe auxiliaire et un accumulateur d'énergie thermique (22) destiné à accumuler l'énergie thermique du système de refroidissement (20) ;
c) un système de climatisation (30), possédant un compresseur de climatisation (31) en tant que groupe auxiliaire et un accumulateur d'énergie thermique (32) comprenant un espace intérieur de véhicule destiné à accumuler l'énergie thermique du système de climatisation (30) ; et
d) un réseau de bord électrique (40), possédant un alternateur (41) en tant que groupe auxiliaire et une batterie (42) en tant qu'accumulateur d'énergie électrique.

9. Dispositif de commande destiné à commander des flux de puissance dans un véhicule automobile en vue de l'alimentation optimisé en fonction de la consommation de plusieurs systèmes d'énergie du véhicule automobile, le dispositif de commande étant conçu pour mettre en œuvre un procédé selon les revendications 1 à 8.

10. Véhicule automobile, notamment véhicule utilitaire, possédant un dispositif de commande selon la revendication 9 ainsi qu'au moins deux des systèmes d'énergie suivants : un système d'air comprimé (10), un système de refroidissement (20), un système de climatisation (30) et un réseau de bord (40) pourvu d'un accumulateur d'énergie (42) électrique.
